# EUROPEAN PATENT SPECIFICATION

(11) **EP 3 166 112 B1**
(45) Date of publication and mention of the grant of the patent: **21.10.2020**
(21) Application number: 15814895.7
(22) Date of filing: 15.05.2015
(51) Int. Cl.: G21B 1/15, C08J 3/14, B01J 13/12, B01J 13/14, B01J 13/20, B01J 13/06

(54) **METHOD FOR MANUFACTURING FUEL CONTAINER FOR LASER FUSION**
VERFAHREN ZUR HERSTELLUNG EINES BRENNSTOFFBEHÄLTERS FÜR LASERFUSION
PROCÉDÉ DE FABRICATION D'UN RÉCIPIENT À COMBUSTIBLE POUR LA FUSION LASER

(30) Priority: 03.07.2014 JP 2014137679
(43) Date of publication of application: 10.05.2017
(73) Proprietor: Hamamatsu Photonics K.K., Hamamatsu-shi, Shizuoka 435-8558 (JP)
(72) Inventor: SATOH Nakahiro, Hamamatsu-shi, Shizuoka 435-8558 (JP); YOSHIMURA Ryo, Hamamatsu-shi, Shizuoka 435-8558 (JP); TAKAGI Masaru, Hamamatsu-shi, Shizuoka 435-8558 (JP); KAWASHIMA Toshiyuki, Hamamatsu-shi, Shizuoka 435-8558 (JP); KAN Hirofumi, Shuchi-gun, Shizuoka 437-0226 (JP)
(74) Representative: Boult Wade Tennant LLP
(86) International application number: PCT/JP2015/064096
(87) International publication number: WO 2016/002365

(56) References cited:
- WO-A1-00/59625
- WO-A1-2011/076858
- WO-A2-2009/058185
- WO-A2-2010/125094
- JP-A- S5 547 485
- JP-A- 2008 523 192
- POLLAUF E J ET AL: "In vitro degradation of polyanhydride/polyester core-shell double-wall microspheres", INTERNATIONAL JOURNAL OF PHARMACEUTICS, ELSEVIER, AMSTERDAM, NL, vol. 301, no. 1-2, 14 September 2005 (2005-09-14), pages 294-303, XP027624270, ISSN: 0378-5173 [retrieved on 2005-09-14]
- POLLAUF E J ET AL: "Use of thermodynamic parameters for design of double-walled microsphere fabrication methods", BIOMATERIALS, ELSEVIER SCIENCE PUBLISHERS BV., BARKING, GB, vol. 27, no. 14, 1 May 2006 (2006-05-01), pages 2898-2906, XP027951050, ISSN: 0142-9612 [retrieved on 2006-05-01]
- S.Y. CHENG ET AL: "Development of Cosmetic Textiles Using Microencapsulation Technology", RESEARCH JOURNAL OF TEXTILE AND APPAREL, vol. 12, no. 4, 1 November 2008 (2008-11-01), pages 41-51, XP055292900, HK ISSN: 1560-6074, DOI: 10.1108/RJTA-12-04-2008-B005
- BO LI ET AL.: 'Formation of Craters in Polymer Capsules, Plasma and Fusion Research' THE JAPAN SOCIETY OF PLASMA SCIENCE AND NUCLEAR FUSION RESEARCH vol. 4, 25 March 2009, pages S 1003 - 1 - S 1003-2, XP055250101

## Description

### Technical Field

The present invention relates to a method for manufacturing a fuel capsule for laser fusion.

### Background Art

Organic polymers organically synthesized are conventionally used as a material for constituting hollow spherical fuel capsules to be used for experiments of laser fusion. Here, from the viewpoint of controlling the implosion process and providing high efficient neutron generation, it is desirable that the layer of organic polymers is made to be multilayered.

As a method of making the layer of organic polymers to be multilayered, there is known a method in which a spherical shell to become a mold is fabricated of a thermally decomposable material, and organic polymers are coated on the surface a plurality of times by a vapor-phase polymerization (for example, see Non Patent Literature 1). After the vapor-phase polymerization, when the mold is removed by thermal decomposition, a fuel capsule consisting of the multilayered organic polymers is obtained.

WO 00/59625 A1 discloses a method for manufacturing capsules comprising a liquid droplet formation step, using concentric nozzles, of discharging a fluid from the first nozzle and a solution of polymers in a volatile solvent into an appropriate liquid for storage and a solvent evaporation step. The solution may also comprise monomers.

### Citation List

### Non Patent Literature

Non Patent Literature 1: a pamphlet of General Atomics Co., "Inertial Fusion Technologies", US, 2009, pp. 11-23

### Summary of Invention

### Technical Problem

The above manufacturing method, however, not only can manufacture only about 10 and several capsules at once, but also causes dome-like protrusions, which are difficult to avoid in the layer formation by a vapor-phase polymerization method, on the surface of the fuel capsules. When the surface of a fuel capsule has protrusions, since the spherical symmetry in implosion is inhibited, it is necessary to grind and remove the protrusions before use. Further, even if the surface is made smooth by grinding the protrusions, since growth traces of the protrusions are left internally, it becomes a hindrance to homogeneous implosion.

Then, the present invention has an object to provide a method for manufacturing a fuel capsule for laser fusion, the method being suitable for mass production, and being capable of manufacturing the multilayered fuel capsule having a high surface accuracy.

### Solution to Problem

The present invention provides a method for manufacturing a fuel capsule for laser fusion, the method comprising: a liquid droplet formation step, using a combined nozzle equipped with a first nozzle and a second nozzle having a discharge port surrounding a discharge port of the first nozzle, of discharging water from the first nozzle and an organic liquid containing an organic solvent from the second nozzle simultaneously into a stabilizing liquid to thereby form liquid droplets in which the water is covered with the organic liquid; an organic solvent removal step of removing the organic solvent from a layer derived from the organic liquid having formed the liquid droplets; and a water removal step of removing the water covered with the layer derived from the organic liquid having formed the liquid droplets, wherein the organic liquid is a liquid in which a first organic polymer selected from polymers belonging to the polymer group consisting of organic polymers, organic polymers having metal atoms or semimetal atoms bonded thereto, organic polymers having halogen atoms bonded thereto and organic polymers having water bubbles or microparticles dispersed therein, and a second organic polymer selected from the polymers belonging to the polymer group are dissolved in the organic solvent; and the first organic polymer and the second organic polymer can be mutually phase-separated.

In this manufacturing method, when water and the organic liquid are discharged from the first and second nozzles, respectively, into the stabilizing liquid, liquid droplets in which the circumference of the water discharged from the first nozzle is covered with the organic liquid discharged from the second nozzle are formed. Then, the first organic polymer and the second organic polymer dissolved in the organic liquid cause phase separation, and constitute two layers of a layer contacting with the water in the interior and a layer covering the circumference of the former layer (being self-layered). Thereafter, the organic solvent and the water are removed to thereby complete a fuel capsule for laser fusion. In this process, since the liquid droplet becomes spherically symmetrical in the stabilizing liquid, protrusions and the like are never formed on specific surfaces. Therefore, according to the manufacturing method according to the present invention, a high-surface accuracy multilayered fuel capsule for laser fusion can be manufactured. Further the manufacturing method according to the present invention, since being capable of continuously forming liquid droplets by continuing discharge of water and the organic liquid from the first and second nozzles, is suitable for mass production of the fuel capsule for laser fusion.

The above manufacturing method may be configured such that: the second nozzle has a first sub-nozzle and a second sub-nozzle which have different diameters from each other and in which a discharge port of one sub-nozzle surrounds a discharge port of the other sub-nozzle; the organic liquid has a first organic liquid and a second organic liquid which are prepared separately from each other; the first organic liquid contains the first organic polymer, and the second organic liquid contains the second organic polymer; and in the liquid droplet formation step, the first organic liquid is discharged from the first sub-nozzle, and the second organic liquid is discharged from the second sub-nozzle. In this case, since the first organic polymer and the second organic polymer are discharged from the separate sub-nozzles, mixing when the first organic polymer and the second organic polymer are discharged into the stabilizing liquid is suppressed low, and the phase separation thereafter becomes easy. Further with respect to portions not having been mixed when discharged, no mixing thereafter is caused and the phase separation state is easily maintained.

The present invention also provides a method for manufacturing a fuel capsule for laser fusion, the method comprising: a liquid droplet formation step, using a combined nozzle equipped with a first nozzle and a second nozzle having a discharge port surrounding a discharge port of the first nozzle, of discharging water from the first nozzle and an organic liquid from the second nozzle simultaneously into a stabilizing liquid to thereby form liquid droplets in which the water is covered with the organic liquid; and a water removal step of removing the water covered with a layer derived from the organic liquid having formed the liquid droplets, wherein the organic liquid is a liquid containing a first raw material monomer corresponding to a first organic polymer selected from polymers belonging to the polymer group consisting of organic polymers, organic polymers having metal atoms or semimetal atoms bonded thereto and organic polymers having halogen atoms bonded thereto, a first polymerization initiator to initiate polymerization of the first raw material monomer, and a second organic polymer selected from polymers belonging to the polymer group consisting of organic polymers, organic polymers having metal atoms or semimetal atoms bonded thereto, organic polymers having halogen atoms bonded thereto and organic polymers having water bubbles or microparticles dispersed therein; and the first organic polymer made by polymerization of the first raw material monomer and the second organic polymer can be mutually phase-separated.

In this manufacturing method, what corresponds to the first organic polymer in the former manufacturing method is in the state of being the raw material monomer, and the organic liquid is constituted by dissolving the polymerization initiator and the second organic polymer in the monomer. In this manufacturing method, when water and the organic liquid are discharged into the stabilizing liquid from the first and second nozzles, respectively, polymerization of the first raw material monomer in the organic liquid is initiated and the first organic polymer is synthesized. Then, the first organic polymer and the second organic polymer cause phase separation to thereby form the target liquid droplets.

This manufacturing method may be configured such that the organic liquid contains an organic solvent and the method further comprises an organic solvent removal step of removing the organic solvent from a layer derived from the organic liquid having formed the liquid droplets. When the organic liquid contains an organic solvent, it is advantageous in the case where the solubility of the second organic polymer to the first raw material monomer is poor, in the case where the viscosity of the organic liquid is intended to be regulated, and in other cases.

This manufacturing method may also be configured such that: the second nozzle has a first sub-nozzle and a second sub-nozzle which have different diameters from each other and in which a discharge port of one sub-nozzle surrounds a discharge port of the other sub-nozzle; the organic liquid has a first organic liquid and a second organic liquid which are prepared separately from each other; the first organic liquid contains the first raw material monomer and the first polymerization initiator, and the second organic liquid contains an organic solvent and the second organic polymer dissolved in the organic solvent; and in the liquid droplet formation step, the first organic liquid and the second organic liquid are discharged from the mutually different nozzles of the first sub-nozzle and the second sub-nozzle.

The present invention also provides a method for manufacturing a fuel capsule for laser fusion, the method comprising: a liquid droplet formation step, using a combined nozzle equipped with a first nozzle and a second nozzle having a discharge port surrounding a discharge port of the first nozzle, of discharging water from the first nozzle and an organic liquid from the second nozzle simultaneously into a stabilizing liquid to thereby form liquid droplets in which the water is covered with the organic liquid; and a water removal step of removing the water covered with a layer derived from the organic liquid having formed the liquid droplets, wherein the organic liquid is a liquid containing a first raw material monomer corresponding to a first organic polymer selected from polymers belonging to the polymer group consisting of organic polymers, organic polymers having metal atoms or semimetal atoms bonded thereto and organic polymers having halogen atoms bonded thereto, a second raw material monomer corresponding to a second organic polymer selected from polymers belonging to the polymer group consisting of organic polymers, organic polymers having metal atoms or semimetal atoms bonded thereto and organic polymers having halogen atoms bonded thereto, a first polymerization initiator to initiate polymerization of the first raw material monomer, and a second polymerization initiator to initiate polymerization of the second raw material monomer; and the first organic polymer made by polymerization of the first raw material monomer and the second organic polymer made by polymerization of the second raw material monomer can be mutually phase-separated.

In this manufacturing method, the raw material monomers are discharged from the second nozzle. In the manufacturing method, when water and the organic liquid are discharged into the stabilizing liquid from the first and second nozzles, respectively, the first raw material monomer and the second raw material monomer in the organic liquid each initiate polymerization and the first organic polymer and the second organic polymer are synthesized. Then, the first organic polymer and the second organic polymer cause phase separation to thereby form the target liquid droplets.

Also in this manufacturing method, the organic liquid contains an organic solvent; and the manufacturing method may be configured by further comprising an organic solvent removal step of removing the organic solvent from a layer derived from the organic liquid having formed the liquid droplets.

Further also this manufacturing method may be configured such that: the second nozzle has a first sub-nozzle and a second sub-nozzle which have different diameters from each other and in which a discharge port of one sub-nozzle surrounds a discharge port of the other sub-nozzle; the organic liquid has a first organic liquid and a second organic liquid which are prepared separately from each other; the first organic liquid contains the first raw material monomer and the first polymerization initiator, and the second organic liquid contains the second raw material monomer and the second polymerization initiator; and in the liquid droplet formation step, the first organic liquid is discharged from the first sub-nozzle, and the second organic liquid is discharged from the second sub-nozzle.

In any of the above manufacturing methods, it is preferable that the organic polymers be hydrocarbon-based polymers.

### Advantageous Effects of Invention

According to the present invention, there can be provided a method for manufacturing a fuel capsule for laser fusion, the method being suitable for mass production, and being capable of manufacturing the multilayered fuel capsule having a high surface accuracy. According to this manufacturing method, the thickness of the each layer and the uniformity of the thickness can also be controlled.

### Brief Description of Drawings

[Figure 1] Figure 1 is a cross-sectional view of a fuel capsule for laser fusion manufactured by a manufacturing method according to the present embodiment.
[Figure 2] Figure 2 is a schematic constitutional diagram of a manufacturing apparatus to carry out a manufacturing method according to the present embodiment.
[Figure 3] Figure 3 is a partially enlarged cross-sectional view of Figure 2.
[Figure 4] Figure 4 is a partially enlarged cross-sectional view of a manufacturing apparatus to carry out a manufacturing method according to another embodiment.
[Figure 5] Figure 5 is a partially enlarged cross-sectional view of a manufacturing apparatus to carry out a manufacturing method according to another embodiment.
[Figure 6] Figure 6 is a view illustrating another example of a water tank.

### Description of Embodiments

Hereinafter, the preferred embodiments according to the present invention will be described in detail by reference to the drawings. Here, in the drawings, the same reference sign is given to the same part or a corresponding part, and duplicate descriptions will be omitted.

### <Fuel capsule for laser fusion>

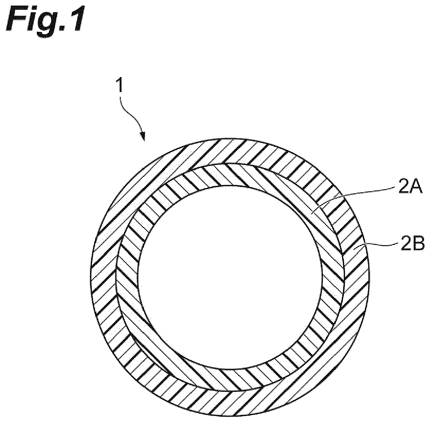

A fuel capsule for laser fusion manufactured by the manufacturing method according to the present embodiment will be described. The fuel capsule for laser fusion is a hollow sphere to be used for experiments on laser fusion, and uses organic polymers organically synthesized as its spherical shell. As illustrated in Figure 1, a fuel capsule 1 for laser fusion consists of two layers of an inner layer 2A making a hollow and closed sphere, and an outer layer 2B covering the outer surface of the inner layer 2A. It is preferable that the diameter of the whole body be about 300 µm to 10 mm, and it is preferable that the total layer thickness of the inner layer 2A and the outer layer 2B be about 5 µm to 300 µm. The fuel capsule 1 for laser fusion is filled in the hollow part with deuterium and tritium being nuclear fusion raw materials, in the use time.

The inner layer 2A is constituted of the first organic polymer, and the outer layer 2B is constituted of the second organic polymer. The first organic polymer and the second organic polymer are, as raw materials in the manufacturing process of the fuel capsule 1 for laser fusion, organic polymers selected from polymers belonging to the polymer group consisting of usual organic polymers, organic polymers having metal atoms or semimetal atoms bonded thereto, organic polymers having halogen atoms bonded thereto and organic polymers having water bubbles or microparticles dispersed therein. It is preferable that the first organic polymer and the second organic polymer be mutually different organic polymers.

Here, the "organic polymer" refers to a polymer which can be artificially synthesized from a corresponding raw material monomer. Among the organic polymers, synthetic resins are preferable.

Among the above, since the organic polymers having metal atoms or semimetal atoms bonded thereto and the organic polymers having halogen atoms bonded thereto are organic polymers having atoms heavier than carbon bonded thereto, it is preferable from the viewpoint of making implosion by laser irradiation more efficient that these organic polymers be employed as the first organic polymer constituting the inner layer 2A of the fuel capsule 1 for laser fusion. On the other hand, it is preferable that the organic polymers having no atoms heavier than carbon bonded thereto be employed as the second organic polymer constituting the outer layer 2B of the fuel capsule 1 for laser fusion.

The "usual organic polymer" refers to a general-purpose organic polymer not being modified with particular functional groups and atoms, and includes, for example, hydrocarbon-based polymers and ester-based polymers, and specifically includes organic polymers soluble in organic solvents, such as polyethylene, polypropylene, polystylene-based resins, polymethyl (meth)acrylate (acrylic resins), ABS resins, polyacetal, polycarbonate, polyester-based resins, phenol-based resins, epoxy-based resins and phenoxy-based resins.

The "organic polymer having metal atoms or semimetal atoms bonded thereto" refers to, for example, a polymer in which metal atoms or semimetal atoms such as Sn, Si, Ge or Pb are bonded to the above "organic polymer".

The "organic polymer having halogen atoms bonded thereto" refers to, for example, a polymer in which fluorine atoms, chlorine atoms, bromine atoms or iodine atoms are bonded to a polymer listed as the above "organic polymer", and specifically includes poly-p-fluorostyrene, poly-2,5-fluorostyrene, poly-p-chlorostyrene, poly-2,5-dichlorostyrene, poly-p-iodostyrene, poly-2,5-iodostyrene, poly-p-bromostyrene, and poly-2,5-bromostyrene.

The "organic polymer having water bubbles or microparticles dispersed therein" refer to, for example, a polymer in which water bubbles or microparticles are dispersed in a resin listed as the above "organic polymer". Here, the water bubbles contained in the organic polymer in the time of being a raw material are removed in the water removal step in the manufacturing process of the fuel capsule 1 for laser fusion, and the water bubbles may be air bubbles for the fuel capsule 1 for laser fusion. When water bubbles or air bubbles are dispersed in the inner layer 2A or the outer layer 2B, the density of the corresponding polymer decreases; and as compared with the case where water bubbles or air bubbles are not dispersed, the implosion speed can be varied. Further the microparticles include, for example, microparticles containing metal atoms. When the microparticles are dispersed in the organic polymer, even if the atoms are ones which are difficult to make to chemically bond to the organic polymer, the atoms can be introduced in the inner layer 2A or the outer layer 2B.

In any case of using the above any polymer, as the "organic polymer" constituting the main skeleton, a hydrocarbon-based polymer is preferable. The hydrocarbon-based polymer may contain a hydroxy group, an amino group, an ester group, an ether group or the like, but an organic polymer consists only of carbon atoms and hydrogen atoms is more preferable.

It is preferable from the viewpoint of the strength of the organic polymer and the suppression of generation of air bubbles in the organic layer in the manufacturing process of the fuel capsule that the molecular weight of the organic polymer (moiety excluding the above metal atoms or semimetal atoms and halogen atoms) be 10000 to 500000; and 100000 to 400000 is more preferable.

### <Manufacturing apparatus>

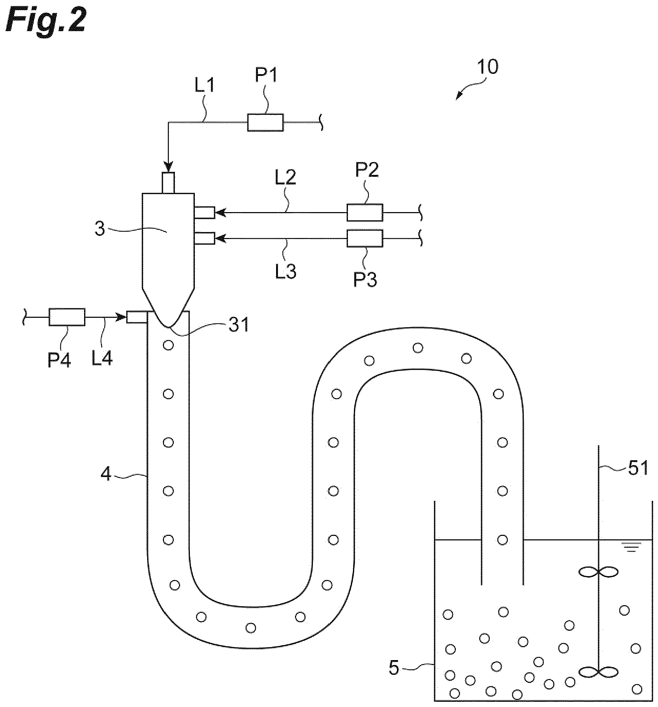

Then, a manufacturing apparatus for manufacturing the fuel capsule 1 for laser fusion will be described. As illustrated in Figure 2, an apparatus for manufacturing the fuel capsule for laser fusion (hereinafter, referred to simply as "manufacturing apparatus") 10 is equipped with a combined nozzle 3 to discharge liquids, lines L1 to L3 and pumps P1 to P3 to supply respective supply liquids to the combined nozzle 3, a tube 4 one end of which is attached to a discharge port 31 of the combined nozzle 3, a line L4 and a pump P4 to supply a stabilizing liquid to the one end side of the tube 4, and a water tank 5 into which the other end of the tube 4 is guided. Here, respective liquid reservoirs present in the preceding stage of the pumps P1 to P4 are omitted in the presentation on the drawing.

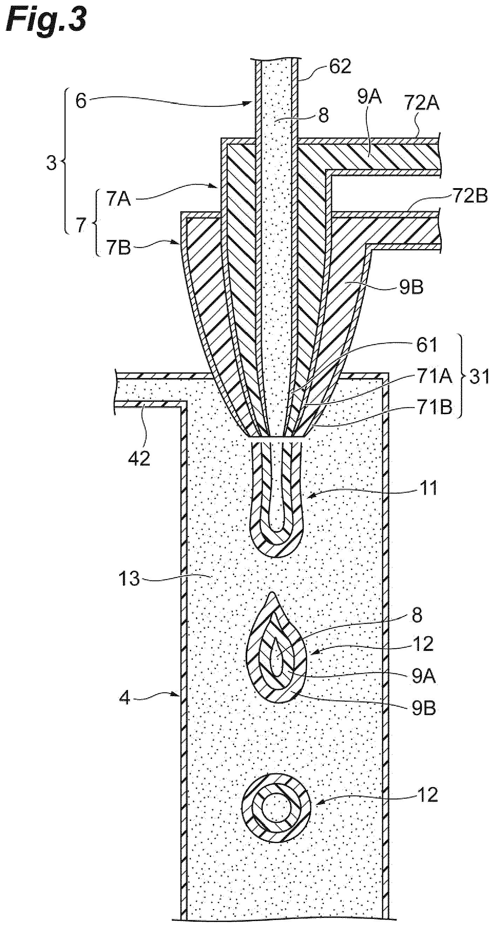

Figure 3 is a partially enlarged cross-sectional diagram of the combined nozzle 3 and one end side of the tube 4. The combined nozzle 3 is equipped with a first nozzle 6 extending rectilinearly and having a nearly cylindrical shape, and a second nozzle 7 having a nearly cylindrical shape which has a discharge port surrounding a discharge port 61 of the first nozzle 6, and has a trunk part surrounding a trunk part of the first nozzle 6. The second nozzle 7 makes, in its interior, a double-pipe structure in which pipes have different diameters from each other and a discharge port 71B of one pipe surrounds a discharge port 71A of the other pipe, and forms a first sub-nozzle 7A surrounding the first nozzle 6 and a second sub-nozzle 7B surrounding the first sub-nozzle 7A.

The first nozzle 6, the first sub-nozzle 7A and the second sub-nozzle 7B all have a tapered shape, and the discharge ports 61, 71A and 71B being their front ends are located in concentric circles where their diameters increase in this order. The inner diameters of the discharge ports 61, 71A and 71B are those under consideration of the size of the fuel capsule 1 for laser fusion, and the layer thicknesses of the inner layer 2A and the outer layer 2B; and it is preferable that the inner diameters be 50 µm to 2000 µm, 60 µm to 2100 µm and 70 µm to 2200 µm, respectively. These ranges are preferable in order to manufacture a fuel capsule for laser fusion having a diameter of 300 µm to 10 mm.

On the opposite sides to the discharge ports 61, 71A and 71B of the first nozzle 6, the first sub-nozzle 7A and the second sub-nozzle 7B, supply ports 62, 72A and 72B being reception ports of the supply liquids are provided, respectively. The lines L1 to L3 are connected, respectively, to the supply ports 62, 72A and 72B; and the pumps P1 to P3 to transport respective supply liquids (not shown in figure) to the combined nozzle 3 are provided to the lines L1 to L3 (see Figure 2).

One end of the tube 4 is attached to the discharge port 31 of the combined nozzle 3 so as to cover the discharge port 31. A supply port 42 to make a stabilizing liquid to flow in the tube 4 is provided to the one end side of the tube 4. A line L4 is connected to the supply port 42; and a pump P4 to transport the stabilizing liquid to the tube 4 is provided to the line L4 (see Figure 2).

The other end of the tube 4 is guided into the water tank 5. The water tank 5 has a stirring blade 51 to stir the stabilizing liquid stored in the tank 5.

### <Manufacturing method>

Then, a method, using the manufacturing apparatus 10, for manufacturing the fuel capsule 1 for laser fusion will be described.

### (Manufacturing procedure)

First, an organic liquid in which a first organic polymer and a second organic polymer are dissolved is prepared. In the selection of the first organic polymer and the second organic polymer, these are selected so that when these are mixed, or when these are dissolved and mixed in an organic solvent, these are organic polymers phase-separating from each other. After the selection, a first organic liquid 9A in which the first organic polymer is dissolved in an organic solvent is prepared, and a second organic liquid 9B in which the second organic polymer is dissolved in an organic solvent is prepared.

Here, as the organic solvent, an organic solvent which can dissolve the first organic polymer and the second organic polymer is used. The organic solvent to be used to dissolve the first organic polymer and the organic solvent to be used to dissolve the second organic polymer may be the same or may be different from each other. As the organic solvent, for example, aromatic hydrocarbons are preferable; and among these, fluorobenzene is preferable from the viewpoint of being good in the volatility (solubility) in water. Further from the viewpoint of improving the uniformity of the thickness of the each layer of the fuel capsule 1 for laser fusion, in order to match densities of the first organic polymer and the second organic polymer, it is preferable that an organic solvent having a boiling point near that of fluorobenzene and a different density from that of fluorobenzene be mixed. In this case, as the organic solvent to be added to fluorobenzene, for example, a combination of benzene and toluene is preferable.

It is preferable that the concentrations of the organic polymers in the first organic liquid 9A and the second organic liquid 9B be each made to be 1% by weight/volume to 30% by weight/volume, though depending on the solubility and the solution viscosity.

The first organic liquid 9A and the second organic liquid 9B are set in respective liquid reservoirs (not shown in figure) so that the pure water 8 can be supplied from the pump P1 through the line L1 to the first nozzle 6; the first organic liquid 9A can be supplied from the pump P2 through the line L2 to the first sub-nozzle 7A; and the second organic liquid 9B can be supplied from the pump P3 through the line L3 to the second sub-nozzle 7B. Further by driving the pump P4, the stabilizing liquid 13 is made to flow at a constant speed through the line L4 and from one end side of the tube 4 to thereby fill the interior of the tube 4 with the stabilizing liquid 13. The stabilizing liquid 13 discharged from the other end of the tube 4 is received by the water tank 5 with the stirring blade 51 being driven.

The stabilizing liquid 13 to be made to flow in the tube 4 is a liquid to stabilize liquid droplets discharged from the combined nozzle 3; and an aqueous solvent having a low compatibility with the organic liquids constituting the liquid droplets is preferable, and particularly water is preferable. Here, "stabilizing" refers to that the sphericity of the liquid droplets and the spherical symmetry of the phase-separated each layer are secured. The stabilizing liquid 13 may have a stabilizing agent added thereto. The stabilizing agent includes water-soluble polymers such as polyvinyl alcohol and polyacrylic acid, for example, a polyacrylic acid having a molecular weight of 1000000; and a polyacrylic acid aqueous solution having the polyacrylic acid dissolved therein and having a concentration thereof of 0.025% by weight to 0.075% by weight, particularly 0.05% by weight, can be used as the stabilizing liquid 13. Further it is preferable from the viewpoint of suppressing convection of the stabilizing liquid 13 that the temperature of the stabilizing liquid 13 be 20°C to 50°C; and 20°C to 25°C is more preferable.

The combined nozzle 3 is installed so that the discharge port 31 is directed downward in the vertical direction. By driving the pumps P1 to P3, the liquids are simultaneously discharged from the nozzles through the lines L1 to L3, respectively. That is, the pure water 8 is discharged from the discharge port 61 of the first nozzle 6 into the stabilizing liquid 13 flowing in the tube 4; the first organic liquid 9A, from the discharge port 71A of the first sub-nozzle 7A thereinto; and the second organic liquid 9B, from the discharge port 71B of the second sub-nozzle 7B thereinto. It is preferable that the flow volume discharged from the each nozzle be 0.5 mL/h to 200 mL/h. At this time, the flow volume is suitably established according to the target size of the fuel capsule 1 for laser fusion to be manufactured, the thickness of the each layer, and the concentrations of the organic polymers.

The discharged liquids form a jet 11 extending downward by the gravity and the flow of the stabilizing liquid 13 in the tube 4, and the front end of the jet 11 is soon torn off to thereby form a liquid droplet 12 (liquid droplet formation step). This liquid droplet 12 is configured such that the pure water 8 discharged from the first nozzle 6 is covered with the first organic liquid 9A and the second organic liquid 9B (so-called "W₁/O₁/O₂/W₂-type emulsion").

Here, the liquid droplet 12 is in the state that parts of the divisions (layers derived from the organic liquids) of the first organic liquid 9A and the second organic liquid 9B are mutually mixed, and the other parts thereof are not mixed. Since the first organic polymer and the second organic polymer have been selected so as to be polymers mutually phase-separating in the state of being dissolved in an organic solvent, the portion where the parts of the first organic liquid 9A and the second organic liquid 9B are mutually mixed is gradually phase-separated (being self-layered). Further the other parts not having been mixed in the discharge cause no mixing thereafter, making easy the maintenance of the phase-separation state.

Here, by regulating the flow volume to be discharged from the each nozzle and the concentrations of the organic polymers in the above ranges, the size of the liquid droplet 12 and the width (thickness) of the each layer can suitably be regulated.

The liquid droplet 12 is carried on the flow of the stabilizing liquid 13 and moves in the tube 4, and soon discharged from the other end of the tube 4 and stored in the water tank 5. In the water tank 5, while the liquid droplet 12 runs around in the water tank 5 by stirring by the stirring blade 51, the organic solvent is leached out and removed from the layers consisting of the first organic liquid 9A and the second organic liquid 9B into the stabilizing liquid 13 (organic solvent removal step). Simultaneously when the organic solvent is removed, the first polymer and the second polymer are cured (solidified), whereby the portion to become the inner layer 2A and the outer layer 2B of the fuel capsule 1 for laser fusion is constituted.

After the organic solvent is removed, the sphere is taken out from the water tank 5; and the pure water 8 inside the sphere is dried and removed (water removal step). Here, in the case of using a material other than water as the stabilizing liquid 13 made to flow in the tube 4, and in the case of adding a stabilizing agent to the stabilizing liquid 13, it is preferable that the sphere be once cleaned with pure water. As a method of drying the pure water inside the sphere, a well-known method can be used; and drying can be carried out, for example, by leaving (air-drying) in the air, a vacuum oven or the like. By the drying operation, the pure water 8 inside the sphere is passed through the inner layer 2A and the outer layer 2B, and evaporated to the outside of the sphere, whereby the sphere becomes hollow.

By the above procedure, the fuel capsule 1 for laser fusion can be manufactured.

According to the above manufacturing method, since the liquid droplet 12 becomes spherically symmetric in the stabilizing liquid 13, and the layers derived from the organic liquids are cured while the liquid droplet 12 runs around in the water tank 5 in the organic solvent removal step, protrusions and the like are never formed on specific surfaces. Therefore, according to the manufacturing method, the high-surface accuracy multilayered fuel capsule 1 for laser fusion can be manufactured. Further by regulating the flow volume to be discharged from the nozzles, the concentrations of the organic polymers, and the like, the thickness of the each layer and the uniformity of the thickness of the fuel capsule 1 for laser fusion can also be controlled.

Further the manufacturing method, since being able to continuously form liquid droplets 12 by continuously discharging the pure water 8 and the organic liquids 9A and 9B from the first and second nozzles 6 and 7, is suitable for mass production of the fuel capsule 1 for laser fusion.

Further if the sub-nozzles 7A and 7B to discharge the organic polymers are selected so that the organic polymer having metal atoms or semimetal atoms bonded thereto and the organic polymer having halogen atoms bonded thereto constitute the inner layer 2A, the fuel capsule 1 for laser fusion having a desired constitution and property can be manufactured.

### (Aspect using other organic liquids)

As substitutes for the above organic liquids, the following organic liquids may be used. That is, at least one of the first organic liquid 9A and the second organic liquid 9B to be prepared as the organic liquids may be prepared as a corresponding monomer and polymerization initiator. For example, in place of the first organic polymer, there can be used a first raw material monomer corresponding thereto and a first polymerization initiator to initiate polymerization of the first raw material monomer. In this case, it is preferable that the first raw material monomer be a liquid, and the first raw material monomer can serve also as a solvent to dissolve the polymerization initiator. In the case where the solubility of the polymerization initiator to the monomer is poor, and in the case where the viscosity of the organic liquid is intended to be decreased, it is preferable that an organic solvent be used.

Further, in place of the first organic polymer, there may be used a first raw material monomer corresponding thereto and a first polymerization initiator, and in place of the second organic polymer, there may be used a second raw material monomer corresponding thereto and a second polymerization initiator. Also in this case, it is preferable that the each raw material monomer be a liquid, and the each raw material monomer can serve also as a solvent to dissolve the corresponding polymerization initiator. Further also in this case, organic solvents may suitably be used.

As the polymerization initiators, there can be used well-known ones to react by light or heat, and the polymerization initiators include radical polymerization initiators, anionic polymerization initiators and cationic polymerization initiators.

In the case of using the raw material monomer and the polymerization initiator as the organic liquid, by applying light or heat on the jet 11 or the liquid droplets 12 in one place from the vicinity of the discharge port 31 of the combined nozzle 3 to the first half part of the tube 4, the polymerization of the raw material monomers is initiated (polymerization initiation step). After the first organic liquid and the second organic liquid are discharged into the stabilizing liquid 13, the liquid droplets maintaining the phase-separation state are formed and move in the tube 4. When light or heat is applied on the liquid droplets, the polymerization of the raw material monomers is initiated and the raw material monomers are cured to make the organic polymers. In the case where no organic solvent is used for either of the first organic liquid and the second organic liquid, the above organic solvent removal step is unnecessary.

### (Manufacturing example)

One example of manufacturing by the above procedure will be described, and is as follows.

The inner diameter of a discharge port of a first nozzle ... 100 µm

The inner diameter of a discharge port of a first sub-nozzle ... 200 µm

The inner diameter of a discharge port of a second sub-nozzle ... 320 µm

The inner diameter of a tube ... 2.7 mm
- A liquid discharged from the first nozzle ... pure water
- A first organic liquid discharged from the first sub-nozzle ... a fluorobenzene solution of poly-p-chlorostyrene (concentration: 3%)
- A second organic liquid discharged from the second sub-nozzle ... a fluorobenzene solution of polystyrene (concentration: 18%)
- A stabilizing liquid made to flow in the tube ... an aqueous solution of polyacrylic acid (concentration: 0.05%)
- The flow volume discharged from the first nozzle ... 3 mL/h
- The flow volume discharged from the first sub-nozzle ... 4 mL/h
- The flow volume discharged from the second sub-nozzle ... 6.5 mL/h
- The flow volume of the stabilizing liquid made to flow in the tube ... 10 mL/min
- The temperature of the stabilizing liquid made to flow in the tube ... room temperature °C

Under these conditions, it is expected that there is manufactured a fuel capsule 1 for laser fusion having a diameter of 1000 µm to 1500 µm (inner layer thickness: 6 µm to 10 µm, outer layer thickness: 14 µm to 20 µm).

### <Manufacturing method using another manufacturing apparatus>

Although in the above manufacturing method, there is shown the case of using the manufacturing apparatus 10 having the combined nozzle 3 having a triple-pipe structure, there may be used a manufacturing apparatus having a combined nozzle having a double-pipe structure. That is, there may be used a combined nozzle in which the second nozzle 7 is not divided to a first sub-nozzle 7A and a second sub-nozzle 7B. Hereinafter, this will be described.

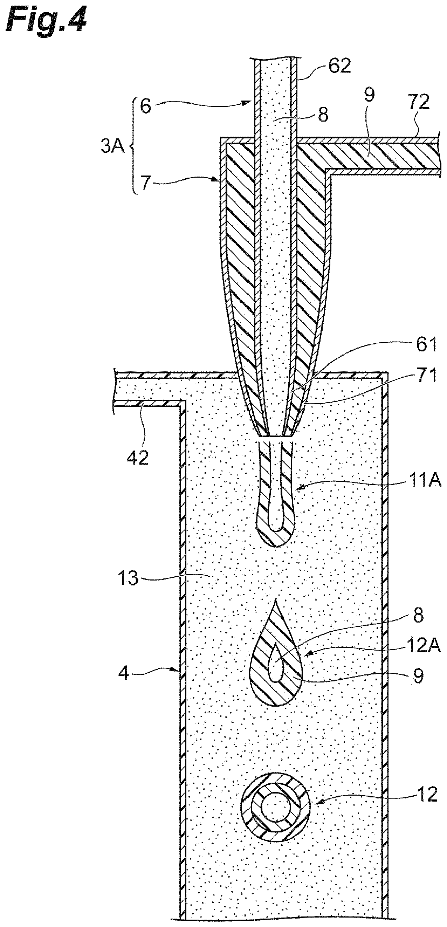

As illustrated in Figure 4, the different point of a combined nozzle 3A having a double-pipe structure from the combined nozzle 3 having a triple-pipe structure is the point that a second nozzle 7 is not divided to a first sub-nozzle and a second sub-nozzle, and an organic liquid 9 is supplied from one supply port 72 and discharged from one discharge port 71.

Further also the organic liquid 9 discharged from the second nozzle 7 is not divided to a first organic liquid and a second organic liquid, and supplied as a liquid of one kind to the second nozzle 7. The organic liquid 9 is prepared by dissolving a first organic polymer and a second organic polymer in an organic solvent. The selection of the organic polymers is the same as in the above embodiment.

When pure water 8 is discharged from a first nozzle 6 and the organic liquid 9 is discharged from the second nozzle 7, these form a jet 11A extending downward by the gravity and the flow of a stabilizing liquid 13 in a tube 4, and the front end of the jet 11A is soon torn off to thereby form a liquid droplet 12A (liquid droplet formation step). The liquid droplet 12A is one in which the pure water 8 discharged from the first nozzle 6 is covered with one layer of the organic liquid 9 (so-called "emulsion of W₁/O/W₂ type).

Here, although the liquid droplet 12A has a constitution in which the circumference of the pure water 8 is covered with one layer of the organic liquid 9, while the liquid droplet 12A moves in the tube 4, a layer (9) derived from the organic liquid causes phase-separation and changes from the state of being the layer having no division to the state (state indicated by reference sign 12) of being separated into two layers (being self-layered). An organic solvent removal step and a water removal step thereafter are carried out similarly to the above embodiment.

According to this manufacturing apparatus and this manufacturing method, a fuel capsule 1 for laser fusion can be manufactured by using the simplified combined nozzle 3A.

Here, also in this embodiment, in place of the first organic polymer in the organic liquid 9, there can be used a first raw material monomer corresponding to the first organic polymer and a first polymerization initiator, and in place of the second organic polymer, there can be used a second raw material monomer corresponding to the second organic polymer and a second polymerization initiator. The use/non-use of an organic solvent can also suitably be selected.

Hitherto, the preferred embodiments according to the present invention have been described, but the present invention is not any more limited to the above embodiments. Although in any of the above embodiments, there have been shown examples in which the fuel capsule 1 for laser fusion consists of two layers of the inner layer 2A and the outer layer 2B, according to the present invention, there can also be manufactured, for example, a fuel capsule 1 for laser fusion consisting of three or more layers.

In this case, by fabricating a combined nozzle having a structure in which the number of sub-nozzles a second nozzle 7 has increases from a first sub-nozzle, a second sub-nozzle, a third sub-nozzle, ..., and to an n-th sub-nozzle, and discharging a first organic liquid, a second organic liquid, a third organic liquid, ..., and an n-th organic liquid from the corresponding sub-nozzles, a W₁/O₁/O₂/O₃/ ... /Oₙ/W₂-type complex emulsion is made to be formed in a tube 4 and a fuel capsule for laser fusion having an n-layered structure can be manufactured. Here, the "n-th organic liquid" is one prepared from the selection similar to the first and second organic liquids.

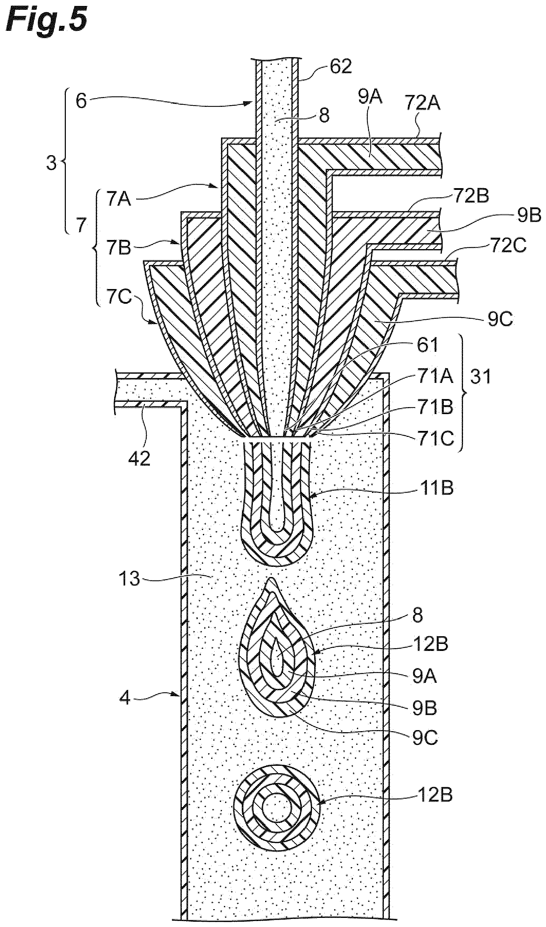

One example thereof is illustrated in Figure 5. Figure 5 illustrates the situation of manufacturing a fuel capsule for laser fusion having a three-layered structure. A combined nozzle 3 illustrated in Figure 5, as compared with the combined nozzle 3 illustrated in Figure 3, is one in which in a second nozzle 7, a third sub-nozzle 7C surrounding a second sub-nozzle 7B is formed. The third sub-nozzle 7C has a discharge port 71C and a supply port 72C as in the first and second sub-nozzles 7A and 7B.

The first and second sub-nozzles 7A and 7B discharge first and second organic liquids 9A and 9B, and simultaneously, the third sub-nozzle 7C discharges a third organic liquid 9C. Thereby, a jet 11B and a liquid droplet 12B are formed in a tube 4. In such a manner, there can be manufactured a fuel capsule for laser fusion in which the kind of the each layer of the multilayer has been optionally controlled.

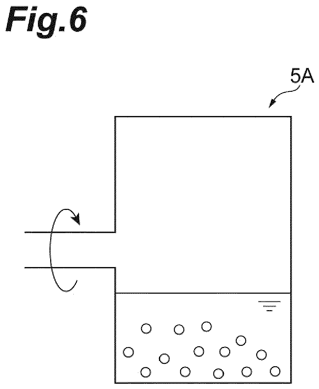

Further in place of the water tank 5 used in the above embodiments, a water tank 5A having a narrow inlet port and a cylindrical body part can be also used as illustrated in Figure 6. In this case, instead of using the stirring blade, the liquid droplets 12 in the interior can be stirred by inclining the water tank 5A so that the axial line of the cylinder becomes nearly horizontal and rotating (see the arrow in figure) the water tank 5A with the horizontal direction being the rotational axial line (organic solvent removal step).

### Reference Signs List

1 ... FUEL CAPSULE FOR LASER FUSION, 3, 3A ... COMBINED NOZZLE, 6 ... FIRST NOZZLE, 7 ... SECOND NOZZLE, 7A ... FIRST SUB-NOZZLE, 7B ... SECOND SUB-NOZZLE, 7C ... THIRD SUB-NOZZLE, 8 ... PURE WATER (WATER), 9 ... ORGANIC LIQUID, 9A ... FIRST ORGANIC LIQUID, 9B ... SECOND ORGANIC LIQUID, 9C ... THIRD ORGANIC LIQUID, 12, 12A, 12B ... LIQUID DROPLET, 13 ... STABILIZING LIQUID, and 31, 61, 71A, 71B, 71C ... DISCHARGE PORT

## Claims

1. A method for manufacturing a fuel capsule for laser fusion, the method comprising:
a liquid droplet formation step, using a combined nozzle equipped with a first nozzle and a second nozzle having a discharge port surrounding a discharge port of the first nozzle, of discharging water from the first nozzle and an organic liquid from the second nozzle simultaneously into a stabilizing liquid to thereby form a liquid droplet having the water covered with the organic liquid; and
a water removal step of removing the water covered with the layer derived from the organic liquid having formed the liquid droplet,
wherein:
(i) the organic liquid contains an organic solvent and is a liquid having a first organic polymer selected from polymers belonging to the polymer group consisting of organic polymers, organic polymers having metal atoms or semimetal atoms bonded thereto, organic polymers having halogen atoms bonded thereto and organic polymers having water bubbles or microparticles dispersed therein, and a second organic polymer selected from the polymers belonging to the polymer group, dissolved in the organic solvent;
and the method further comprises an organic solvent removal step of removing the organic solvent from a layer derived from the organic liquid having formed the liquid droplet; or
(ii) wherein the organic liquid is a liquid comprising a first raw material monomer corresponding to a first organic polymer selected from polymers belonging to the polymer group consisting of organic polymers, organic polymers having metal atoms or semimetal atoms bonded thereto and organic polymers having halogen atoms bonded thereto, a first polymerization initiator to initiate polymerization of the first raw material monomer, and a second organic polymer selected from polymers belonging to the polymer group consisting of organic polymers, organic polymers having metal atoms or semimetal atoms bonded thereto, organic polymers having halogen atoms bonded thereto and organic polymers having water bubbles or microparticles dispersed therein, and
wherein the first organic polymer is made by polymerization of the first raw material monomer; or
(iii) wherein the organic liquid is a liquid comprising a first raw material monomer corresponding to a first organic polymer selected from polymers belonging to the polymer group consisting of organic polymers, organic polymers having metal atoms or semimetal atoms bonded thereto and organic polymers having halogen atoms bonded thereto, a second raw material monomer corresponding to a second organic polymer selected from polymers belonging to the polymer group consisting of organic polymers, organic polymers having metal atoms or semimetal atoms bonded thereto and organic polymers having halogen atoms bonded thereto, a first polymerization initiator to initiate polymerization of the first raw material monomer, and a second polymerization initiator to initiate polymerization of the second raw material monomer; and
wherein the first organic polymer is made by polymerization of the first raw material monomer and the second organic polymer is made by polymerization of the second raw material monomer,
and wherein the first organic polymer and the second organic polymer can be mutually phase-separated.

2. The method for manufacturing a fuel capsule for laser fusion according to claim 1 in accordance with alternative (i), wherein:
the second nozzle has a first sub-nozzle and a second sub-nozzle having different diameters from each other wherein a discharge port of one sub-nozzle surrounds a discharge port of the other sub-nozzle;
the organic liquid has a first organic liquid and a second organic liquid prepared separately from each other;
the first organic liquid comprises the first organic polymer, and
the second organic liquid comprises the second organic polymer; and
in the liquid droplet formation step, the first organic liquid is discharged from the first sub-nozzle, and the second organic liquid is discharged from the second sub-nozzle.

3. The method for manufacturing a fuel capsule for laser fusion according to claim 1 in accordance with alternative (ii), wherein:
the organic liquid comprises an organic solvent; and
the method further comprises an organic solvent removal step of removing the organic solvent from a layer derived from the organic liquid having formed the liquid droplet.

4. The method for manufacturing a fuel capsule for laser fusion according to claim 3, wherein:
the second nozzle has a first sub-nozzle and a second sub-nozzle having different diameters from each other wherein a discharge port of one sub-nozzle surrounds a discharge port of the other sub-nozzle;
the organic liquid has a first organic liquid and a second organic liquid prepared separately from each other;
the first organic liquid comprises the first raw material monomer and the first polymerization initiator, and
the second organic liquid comprises an organic solvent and the second organic polymer dissolved in the organic solvent; and
in the liquid droplet formation step, the first organic liquid and the second organic liquid are discharged from the mutually different nozzles of the first sub-nozzle and the second sub-nozzle.

5. The method for manufacturing a fuel capsule for laser fusion according to claim 1 in accordance with alternative (iii), wherein:
the organic liquid comprises an organic solvent; and
the method further comprises an organic solvent removal step of removing the organic solvent from a layer derived from the organic liquid having formed the liquid droplet.

6. The method for manufacturing a fuel capsule for laser fusion according to claim 1 in accordance with alternative (iii) or claim 5, wherein:
the second nozzle has a first sub-nozzle and a second sub-nozzle having different diameters from each other wherein a discharge port of one sub-nozzle surrounds a discharge port of the other sub-nozzle;
the organic liquid has a first organic liquid and a second organic liquid prepared separately from each other;
the first organic liquid comprises the first raw material monomer and the first polymerization initiator, and
the second organic liquid comprises the second raw material monomer and the second polymerization initiator; and
in the liquid droplet formation step, the first organic liquid is discharged from the first sub-nozzle, and the second organic liquid is discharged from the second sub-nozzle.

7. The method for manufacturing a fuel capsule for laser fusion according to any one of claims 1 to 6, wherein the organic polymers are each a hydrocarbon-based polymer.

## Patentansprüche

1. Verfahren zum Herstellen einer Brennstoff-Kapsel für eine Laser-Fusion, wobei das Verfahren umfasst:
einen Flüssigkeit-Tropfen-Bildung-Schritt unter Verwendung einer kombinierten Düse, welche mit einer ersten Düse und einer zweiten Düse ausgestattet ist, welche einen Abgabe-Anschluss aufweist, welcher einen Abgabe-Anschluss der ersten Düse umgibt, zum simultanen Abgeben von Wasser von der ersten Düse und einer organischen Flüssigkeit von der zweiten Düse in eine Stabilisierung-Flüssigkeit, um dadurch einen Flüssigkeit-Tropfen zu bilden, welcher das Wasser mit der organischen Flüssigkeit bedeckt aufweist; und einen Wasser-Entfernung-Schritt eines Entfernens des Wassers, welches mit der Schicht bedeckt ist, welche von der organischen Flüssigkeit abgeleitet ist, wobei der Flüssigkeit-Tropfen gebildet worden ist,
wobei:
(i) die organische Flüssigkeit ein organisches Lösungsmittel umfasst und eine Flüssigkeit mit einem ersten organischen Polymer ist, welches ausgewählt ist aus Polymeren, welche zu der Polymer-Gruppe gehören, bestehend aus organischen Polymeren, organischen Polymeren mit Metall-Atomen oder Halbmetall-Atomen, welche daran gebunden sind, organischen Polymeren mit Halogen-Atomen, welche daran gebunden sind, und organischen Polymeren mit darin verteilten Wasser-Bläschen oder Mikropartikeln, und mit einem zweiten organischen Polymer, welches ausgewählt ist aus den Polymeren, welche zu der Polymer-Gruppe gehören, welche in dem organischen Lösungsmittel gelöst sind; und wobei das Verfahren ferner einen Organisches-Lösungsmittel-Entfernung-Schritt eines Entfernens des organischen Lösungsmittels von einer Schicht umfasst, welche von der organischen Flüssigkeit abgeleitet wird, wobei der Flüssigkeit-Tropfen gebildet worden ist; oder
(ii) wobei die organische Flüssigkeit eine Flüssigkeit ist, welche ein erstes Rohmaterial-Monomer, entsprechend einem ersten organischen Polymer, welches ausgewählt ist aus Polymeren, welche zu der Polymer-Gruppe gehören, bestehend aus organischen Polymeren, organischen Polymeren, welche Metall-Atome oder Halbmetall-Atome daran gebunden aufweisen, und organischen Polymeren mit Halogen-Atomen daran gebunden, einen ersten Polymerisation-Initiator, um eine Polymerisation des ersten Rohmaterial-Monomers zu initiieren, und ein zweites organisches Polymer umfasst, welches aus Polymeren ausgewählt ist, welche zu der Polymer-Gruppe gehören, bestehend aus organischen Polymeren, organischen Polymeren mit Metall-Atomen oder Halbmetall-Atomen daran gebunden, organischen Polymeren mit Halogen-Atomen daran gebunden und organischen Polymeren mit darin verteilten Wasser-Bläschen oder Mikropartikeln, und
wobei das erste organische Polymer durch eine Polymerisation des ersten Rohmaterial-Monomers hergestellt wird; oder
(iii) wobei die organische Flüssigkeit eine Flüssigkeit ist, welche ein erstes Rohmaterial-Monomer, entsprechend einem ersten organischen Polymer, ausgewählt aus Polymeren, welche zu der Polymer-Gruppe gehören, bestehend aus organischen Polymeren, organischen Polymeren mit Metall-Atomen oder Halbmetall-Atomen daran gebunden und organischen Polymeren mit Halogen-Atomen daran gebunden, ein zweites Rohmaterial-Monomer, welches einem zweiten organischen Polymer entspricht, welches ausgewählt ist aus Polymeren, welche zu der Polymer-Gruppe gehören, bestehend aus organischen Polymeren, organischen Polymeren mit Metall-Atomen oder Halbmetall-Atomen daran gebunden und organischen Polymeren mit Halogen-Atomen daran gebunden, einen ersten Polymerisation-Initiator, um eine Polymerisation des ersten Rohmaterial-Monomers zu initiieren, und einen zweiten Polymerisation-Initiator umfasst, um eine Polymerisation des zweiten Rohmaterial-Monomers zu initiieren; und
wobei das erste organische Polymer durch eine Polymerisation des ersten Rohmaterial-Monomers hergestellt ist und das zweite organische Polymer durch eine Polymerisation des zweiten Rohmaterial-Monomers hergestellt ist, und wobei das erste organische Polymer und das zweite organische Polymer gegenseitig Phasen-getrennt werden können.

2. Verfahren zum Herstellen einer Brennstoff-Kapsel für eine Laser-Fusion nach Anspruch 1 im Einklang mit Alternative (i), wobei:
die zweite Düse eine erste Unter-Düse und eine zweite Unter-Düse aufweist, welche voneinander verschiedene Durchmesser aufweisen, wobei ein Abgabe-Anschluss einer Unter-Düse einen Abgabe-Anschluss der anderen Unter-Düse umgibt;
die organische Flüssigkeit eine erste organische Flüssigkeit und eine zweite organische Flüssigkeit aufweist, welche voneinander getrennt zubereitet werden;
die erste organische Flüssigkeit das erste organische Polymer umfasst, und
die zweite organische Flüssigkeit das zweite organische Polymer umfasst; und
in dem Flüssigkeit-Tropfen-Bildung-Schritt die erste organische Flüssigkeit von der ersten Unter-Düse abgegeben wird und die zweite organische Flüssigkeit von der zweiten Unter-Düse abgegeben wird.

3. Verfahren zum Herstellen einer Brennstoff-Kapsel für eine Laser-Fusion nach Anspruch 1 im Einklang mit Alternative (ii), wobei:
die organische Flüssigkeit ein organisches Lösungsmittel umfasst; und
das Verfahren ferner einen Organisches-Lösungsmittel-Entfernung-Schritt eines Entfernens des organischen Lösungsmittels von einer Schicht umfasst, welche von der organischen Flüssigkeit mit dem gebildeten Flüssigkeit-Tropfen abgeleitet ist.

4. Verfahren zum Herstellen einer Brennstoff-Kapsel für eine Laser-Fusion nach Anspruch 3, wobei:
die zweite Düse eine erste Unter-Düse und eine zweite Unter-Düse aufweist, welche voneinander verschiedene Durchmesser aufweisen, wobei ein Abgabe-Anschluss einer Unter-Düse einen Abgabe-Anschluss der anderen Unter-Düse umgibt;
die organische Flüssigkeit eine erste organische Flüssigkeit und eine zweite organische Flüssigkeit aufweist, welche voneinander getrennt zubereitet werden;
die erste organische Flüssigkeit das erste Rohmaterial-Monomer und den ersten Polymerisation-Initiator umfasst, und
die zweite organische Flüssigkeit ein organisches Lösungsmittel und das zweite organische Polymer in dem organischen Lösungsmittel gelöst umfasst; und
in dem Flüssigkeit-Tropfen-Bildung-Schritt die erste organische Flüssigkeit und die zweite organische Flüssigkeit von den zueinander verschiedenen Düsen der ersten Unter-Düse und der zweiten Unter-Düse abgegeben werden.

5. Verfahren zum Herstellen einer Brennstoff-Kapsel für eine Laser-Fusion nach Anspruch 1 im Einklang mit Alternative (iii), wobei:
die organische Flüssigkeit ein organisches Lösungsmittel umfasst; und
das Verfahren ferner einen Organisches-Lösungsmittel-Entfernung-Schritt eines Entfernens des organischen Lösungsmittels von einer Schicht umfasst, welche von der organischen Flüssigkeit abgeleitet wird, wobei der Flüssigkeit-Tropfen gebildet worden ist.

6. Verfahren zum Herstellen einer Brennstoff-Kapsel für eine Laser-Fusion nach Anspruch 1 im Einklang mit Alternative (iii) oder Anspruch 5, wobei:
die zweite Düse eine erste Unter-Düse und eine zweite Unter-Düse aufweist, welche voneinander verschiedene Durchmesser aufweisen, wobei ein Abgabe-Anschluss einer Unter-Düse einen Abgabe-Anschluss der anderen Unter-Düse umgibt;
die organische Flüssigkeit eine erste organische Flüssigkeit und eine zweite organische Flüssigkeit aufweist, welche voneinander getrennt zubereitet werden;
die erste organische Flüssigkeit das erste Rohmaterial-Monomer und den ersten Polymerisation-Initiator umfasst, und
die zweite organische Flüssigkeit das zweite Rohmaterial-Monomer und den zweiten Polymerisation-Initiator umfasst; und
in dem Flüssigkeit-Tropfen-Bildung-Schritt die erste organische Flüssigkeit von der ersten Unter-Düse abgegeben wird und die zweite organische Flüssigkeit von der zweiten Unter-Düse abgegeben wird.

7. Verfahren zum Herstellen einer Brennstoff-Kapsel für eine Laser-Fusion nach einem der Ansprüche 1 bis 6, wobei die organischen Polymere jeweils ein Kohlenstoff-basiertes Polymer sind.

## Revendications

1. Procédé de fabrication d'une capsule de combustible pour fusion laser, le procédé comprenant :
une étape de formation de gouttelettes de liquide, utilisant une buse combinée équipée d'une première buse et d'une deuxième buse ayant un orifice de déversement entourant un orifice de déversement de la première buse, consistant à déverser l'eau provenant de la première buse et un liquide organique provenant de la deuxième buse simultanément dans un liquide de stabilisation pour former ainsi une gouttelette de liquide dont l'eau est recouverte du liquide organique ; et
une étape d'élimination de l'eau consistant à éliminer l'eau recouverte de la couche dérivée du liquide organique ayant formé la gouttelette de liquide,
dans lequel :
(i) le liquide organique contient un solvant organique et est un liquide ayant un premier polymère organique choisi parmi des polymères appartenant au groupe de polymères consistant en des polymères organiques, des polymères organiques ayant des atomes métalliques ou des atomes semi-métalliques liés à ceux-ci, des polymères organiques ayant des atomes d'halogène liés à ceux-ci et des polymères organiques dans lesquels sont dispersées des bulles d'eau ou des microparticules, et un deuxième polymère organique choisi parmi les polymères appartenant au groupe de polymères, dissous dans le solvant organique ;
et le procédé comprend en outre une étape d'élimination du solvant organique consistant à éliminer le solvant organique d'une couche dérivée du liquide organique ayant formé la gouttelette de liquide ; ou
(ii) dans lequel le liquide organique est un liquide comprenant un premier monomère de matière première correspondant à un premier polymère organique choisi parmi des polymères appartenant au groupe de polymères consistant en des polymères organiques, des polymères organiques ayant des atomes métalliques ou des atomes semi-métalliques liés à ceux-ci et des polymères organiques ayant des atomes d'halogène liés à ceux-ci, un premier initiateur de polymérisation pour initier la polymérisation du premier monomère de matière première, et un deuxième polymère organique choisi parmi des polymères appartenant au groupe de polymères consistant en des polymères organiques, des polymères organiques ayant des atomes métalliques ou des atomes semi-métalliques liés à ceux-ci, des polymères organiques ayant des atomes d'halogène liés à ceux-ci et des polymères organiques dans lesquels sont dispersées des bulles d'eau ou des microparticules, et
dans lequel le premier polymère organique est fabriqué par polymérisation du premier monomère de matière première ; ou
(iii) dans lequel le liquide organique est un liquide comprenant un premier monomère de matière première correspondant à un premier polymère organique choisi parmi des polymères appartenant au groupe de polymères consistant en des polymères organiques, des polymères organiques ayant des atomes métalliques ou des atomes semi-métalliques liés à ceux-ci et des polymères organiques ayant des atomes d'halogène liés à ceux-ci, un deuxième monomère de matière première correspondant à un deuxième polymère organique choisi parmi des polymères appartenant au groupe de polymères consistant en des polymères organiques, des polymères organiques ayant des atomes métalliques ou des atomes semi-métalliques liés à ceux-ci et des polymères organiques ayant des atomes d'halogène liés à ceux-ci, un premier initiateur de polymérisation pour initier la polymérisation du premier monomère de matière première, et un deuxième initiateur de polymérisation pour initier la polymérisation du deuxième monomère de matière première ; et
dans lequel le premier polymère organique est fabriqué par polymérisation du premier monomère de matière première et le deuxième polymère organique est fabriqué par polymérisation du deuxième monomère de matière première, et dans lequel le premier polymère organique et le deuxième polymère organique peuvent être mutuellement séparés en phases.

2. Procédé de fabrication d'une capsule de combustible pour fusion laser selon la revendication 1 conformément à la variante (i), dans lequel :
la deuxième buse a une première sous-buse et une deuxième sous-buse ayant des diamètres différents l'un de l'autre, où un orifice de déversement d'une sous-buse entoure un orifice de déversement de l'autre sous-buse ;
le liquide organique a un premier liquide organique et un deuxième liquide organique préparés séparément l'un de l'autre ;
le premier liquide organique comprend le premier polymère organique, et
le deuxième liquide organique comprend le deuxième polymère organique ; et
dans l'étape de formation de gouttelettes de liquide, le premier liquide organique est déversé à partir de la première sous-buse, et le deuxième liquide organique est déversé à partir de la deuxième sous-buse.

3. Procédé de fabrication d'une capsule de combustible pour fusion laser selon la revendication 1 conformément à la variante (ii), dans lequel :
le liquide organique comprend un solvant organique ; et
le procédé comprend en outre une étape d'élimination du solvant organique consistant à éliminer le solvant organique d'une couche dérivée du liquide organique ayant formé la gouttelette de liquide.

4. Procédé de fabrication d'une capsule de combustible pour fusion laser selon la revendication 3, dans lequel :
la deuxième buse a une première sous-buse et une deuxième sous-buse ayant des diamètres différents l'un de l'autre, où un orifice de déversement d'une sous-buse entoure un orifice de déversement de l'autre sous-buse ;
le liquide organique a un premier liquide organique et un deuxième liquide organique préparés séparément l'un de l'autre ;
le premier liquide organique comprend le premier monomère de matière première et le premier initiateur de polymérisation, et
le deuxième liquide organique comprend un solvant organique et le deuxième polymère organique dissous dans le solvant organique ; et
dans l'étape de formation de gouttelettes de liquide, le premier liquide organique et le deuxième liquide organique sont déversés à partir des buses mutuellement différentes de la première sous-buse et de la deuxième sous-buse.

5. Procédé de fabrication d'une capsule de combustible pour fusion laser selon la revendication 1 conformément à la variante (iii), dans lequel :
le liquide organique comprend un solvant organique ; et
le procédé comprend en outre une étape d'élimination du solvant organique consistant à éliminer le solvant organique d'une couche dérivée du liquide organique ayant formé la gouttelette de liquide.

6. Procédé de fabrication d'une capsule de combustible pour fusion laser selon la revendication 1 conformément à la variante (iii) ou la revendication 5, dans lequel :
la deuxième buse a une première sous-buse et une deuxième sous-buse ayant des diamètres différents l'un de l'autre, où un orifice de déversement d'une sous-buse entoure un orifice de déversement de l'autre sous-buse ;
le liquide organique a un premier liquide organique et un deuxième liquide organique préparés séparément l'un de l'autre ;
le premier liquide organique comprend le premier monomère de matière première et le premier initiateur de polymérisation, et
le deuxième liquide organique comprend le deuxième monomère de matière première et le deuxième initiateur de polymérisation ; et
dans l'étape de formation de gouttelettes de liquide, le premier liquide organique est déversé à partir de la première sous-buse, et le deuxième liquide organique est déversé à partir de la deuxième sous-buse.

7. Procédé de fabrication d'une capsule de combustible pour fusion laser selon l'une quelconque des revendications 1 à 6, dans lequel chacun des polymères organiques est un polymère à base d'hydrocarbure.
